# FASCICULE DE BREVET EUROPEEN

(11) **EP 0 818 676 B1**
(45) Date de publication et mention de la délivrance du brevet: **10.09.2003**
(21) Numéro de dépôt: 96201939.4
(22) Date de dépôt: 10.07.1996
(51) Int. Cl.: G01N 25/32

(54) **Dispositif pour la mesure de la concentration en peroxyde d'hydrogène**
Vorrichtung zur Konzentrationsmessung von Wasserstoffperoxid
Device for measuring hydrogen peroxide concentration

(43) Date de publication de la demande: 14.01.1998
(73) Titulaire: SOCIETE DES PRODUITS NESTLE S.A., 1800 Vevey (CH)
(72) Inventeur: Moser, Lukas, 3510 Konolfingen (CH)
(74) Mandataire: Thomas, Alain

(56) Documents cités:
- WO-A-95/05592
- DE-A- 3 102 330
- US-A- 4 070 157
- US-A- 4 170 455
- US-A- 4 998 954
- US-A- 5 167 927

## Description

L'invention concerne un dispositif pour la mesure de la concentration en peroxyde d'hydrogène d'un flux gazeux à base d'air, de vapeur d'eau et de peroxyde d'hydrogène, comprenant une canalisation principale d'arrivée dudit fluide gazeux et une cellule de mesure contenant un catalyseur de décomposition dudit peroxyde d'hydrogène.

Il existe déjà un dispositif connu avec lequel il est possible de mesurer la concentration d'ozone et de peroxyde d'hydrogène à l'aide d'un catalyseur permettant la décomposition des gaz précités, à savoir le brevet US 5'167'927. Les inconvénients de ce dispositif sont les suivantes :
- La mesure n'est pas suffisamment précise, car la détermination est indirecte, elle se fait sur la température du tube et non pas dans le flux de gaz,
- il n'y a pas de surveillance de l'efficacité du catalyseur et
- le système est onéreux et son installation est difficile.

Le dispositif selon la présente invention permet de pallier aux inconvénients mentionnés ci-dessus, avec un montage garantissant la mesure précise de la concentration en peroxyde d'hydrogène, garantissant une indication en cas de déficience du catalyseur et permettant d'avoir un montage économique et facile à monter.

L'invention concerne un dispositif selon le préambule de la revendication principale.

Le principe du dispositif selon l'invention est connu et basé sur la décomposition du peroxyde d'hydrogène. La décomposition se fait en eau et oxygène et elle est exothermique. Elle se fait spontanément à haute température. Avec un catalyseur, elle a lieu spontanément à température inférieure, par exemple de l'ordre de 120°C.

Le flux principal arrive par la canalisation et une partie de ce flux traverse la cellule contenant le catalyseur : si on note T1, la température d'arrivée de ce gaz, ledit gaz sortira de la cellule à une température T2>T1. Cette augmentation de température est due à la décomposition exothermique du peroxyde d'hydrogène. Il faut donc au préalable effectuer un étalonnage avec une vitesse spécifique d'arrivée d'air : on établit la courbe d'augmentation de température en fonction de la concentration en peroxyde d'hydrogène à une certaine température d'arrivée du flux d'air. Cette courbe est linéaire, car avec cet arrangement de cellule il n'y a que très peu de perte de chaleur.

Le fait de disposer la cellule dans la canalisation principale permet de prélever une fraction ayant vraiment la concentration du flux principal et donne une mesure immédiate (pas d'inertie dans la mesure).

Le fait de disposer le système de mesure dans l'axe de la canalisation permet de réaliser un montage et un démontage facile, et facilite en outre le nettoyage. Dans une forme de réalisation préférée, la cellule de mesure est disposée dans un coude de la canalisation principale.

Il faut que seulement une partie du flux principal passe dans la cellule : cela nécessite que ladite cellule soit placée dans un tube isolé du reste du flux. Le tube doit être en une matière qui ne se décompose pas avec le peroxyde d'hydrogène et qui tient à la température d'environ 120°C. Le tube est en métal. Le métal est de préférence de l'acier. On prélève de manière spécifique au maximum 3% du flux primaire.

Dans une forme de réalisation particulière du dispositif selon l'invention, la cellule de mesure comporte deux catalyseurs de décomposition de peroxyde d'hydrogène . Le premier sert pour la mesure et le second pour le contrôle du premier. Le peroxyde d'hydrogène se décompose dans le premier et lors de la décomposition la température s'élève de T1 à T2. On détermine la concentration en peroxyde d'hydrogène grâce à la différence de température T1-T2. Dans le second, il n'y a plus de décomposition de peroxyde d'hydrogène, c'est-à-dire que le gaz n'est plus chauffé. Si le premier élément ne décompose plus totalement , c'est le second élément qui décomposera le peroxyde d'hydrogène résiduel. Il y aura alors une différence de température T3-T2. Cette différence indiquera alors une déficience du dispositif : il faudra remplacer le premier élément ou les deux.

On a constaté que la forme du catalyseur n'était pas critique. On peut l'utiliser sous forme de billes ou sous forme lamellée. Il est cependant préférable de l'utiliser sous forme lamellée.

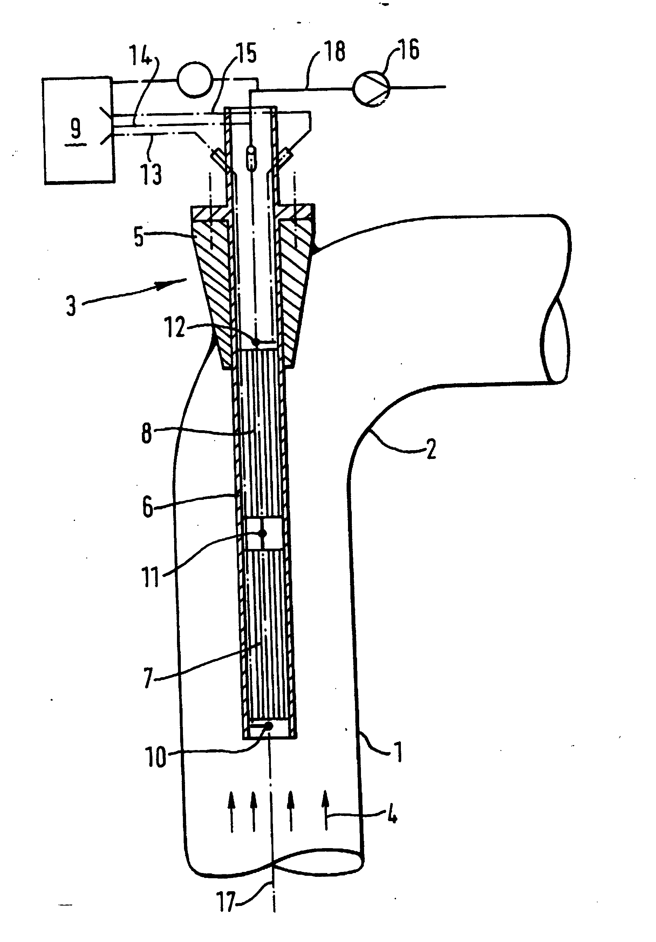

La suite de la description est faite en relation avec la figure unique, qui est une représentation schématique du dispositif selon l'invention.

La canalisation principale (1) d'axe (17) présente un coude (2), au niveau duquel est disposé le dispositif (3) selon l'invention. Le flux gazeux (4) arrive dans le sens des flèches. Le dispositif (3) comprend un manchon (5) portant un tube (6). Dans le tube, il est prévu un premier catalyseur (7) et un second catalyseur (8) ainsi que des détecteurs de température (10), (11) et (12) pour mesurer respectivement T1, T2 et T3 : ces températures ainsi que leurs différences sont affichées sur l'unité de contrôle (9). Ces trois détecteurs de température sont reliés par (13), (14) et (15) à ladite unité de contrôle. Le flux de gaz mesuré est aspiré après son passage dans les deux catalyseurs par la conduite (13), à l'aide de la pompe (16).

Le dispositif selon l'invention fonctionne de la manière suivante : Le flux de gaz contenant l'air, la vapeur d'eau et le peroxyde d'hydrogène (débit compris entre 300 et 1000 l/min.) arrive à une température de 120°C et 3 % de ce flux incident passe dans le tube (6). Le détecteur (10) fait afficher la température de 120°C. A la sortie du catalyseur (7), (11) donne la température T2 et (12) donne la même température T3-T2 : signifiant que toute la quantité de peroxyde d'hydrogène a été décomposée dans (7). La pompe (14) aspire le gaz résiduel.

Au lieu de la pompe (16), il est également possible de travailler avec une pression p₁ dans la canalisation principale (1) supérieure à la pression p₂ dans la conduite (13): le gaz résiduel est déplacé grâce à cette différence de pression. Si on veut éviter tout risque de passage de peroxyde d'hydrogène résiduel dans l'atmosphère, il est possible de prévoir à la sortie sur la conduite (13), un catalyseur de décomposition supplémentaire.

On dispose ainsi d'un moyen rapide et sûr permettant de déterminer la concentration en peroxyde d'hydrogène.

La suite de la description est faite en référence à l'exemple suivant.

### Exemple

On opère avec un flux d'air incident de 300 l/min. à 120°C dont on prélève 10 l/min. Le dispositif selon l'invention a un diamètre de 10 mm et une longueur de 50 mm. Le tube support du catalyseur est en acier et le catalyseur est en céramique lamellée.

Avec une concentration de 10 mg de H2O2 par litre d'air, on mesure une différence T2-T1 de 13°C. Avec une concentration de 15 mg de peroxyde d'hydrogène, on obtient une différence de température de 21°C. Finalement, avec une concentration de 20 mg, on arrive à une différence de température de 27°C.

## Revendications

1. Dispositif pour la mesure de la concentration en peroxyde d'hydrogène d'un flux gazeux (4) à base d'air, de vapeur d'eau et de peroxyde d'hydrogène, comprenant une canalisation principale (1) d'arrivée dudit flux gazeux et une cellule de mesure contenant un catalyseur de décomposition dudit peroxyde d'hydrogène, **caractérisé en ce que** ladite cellule est disposée dans la canalisation principale d'arrivée dudit flux gazeux, dans l'axe de ladite canalisation et dans un tube (6) isolé du reste du flux.

2. Dispositif selon la revendication 1, **caractérisé en ce que** la cellule de mesure comporte deux catalyseurs (7, 8) de décomposition de peroxyde d'hydrogène.

3. Dispositif selon l'une des revendications 1 ou 2, **caractérisé en ce que** le catalyseur est lamellé.

## Claims

1. Device for measuring the concentration of hydrogen peroxide in a stream of gas (4) based on air, water vapour and hydrogen peroxide, comprising a main inlet pipe (1) for the said gas stream and a measuring cell containing a catalyst for decomposing the said hydrogen peroxide, **characterized in that** the said cell is positioned in the main inlet pipe for the said gas stream, in the axis of the said pipe and in a tube (6) isolated from the remainder of the stream.

2. Device according to claim 1, **characterized in that** the measuring cell contains two catalysts (7, 8) for decomposing hydrogen peroxide.

3. Device according to either of claims 1 or 2, **characterized in that** the catalyst is lamellar.

## Patentansprüche

1. Vorrichtung zum Messen der Wasserstoffperoxid-Konzentration eines Gasstroms (4) auf der Grundlage von Luft, Wasserdampf und Wasserstoffperoxid, umfassend eine Hauptleitung (1) für den Zutritt des Gasstroms und eine Meßzelle, die einen Katalysator für den Wasserstoffperoxid-Zerfall enthält, **dadurch gekennzeichnet, daß** die Zelle in der Hauptleitung für den Zutritt des Gasstroms in der Achse dieser Leitung und in einem von dem Rest des Stroms isolierten Rohr (6) angeordnet ist.

2. Vorrichtung nach Anspruch 1, **dadurch gekennzeichnet, daß** die Meßzelle zwei Katalysatoren (7, 8) für den Wasserstoffper-oxid-Zerfall aufweist.

3. Vorrichtung nach einem der Ansprüche 1 oder 2, **dadurch gekennzeichnet, daß** der Katalysator lamellenförmig ist.
